# EUROPEAN PATENT SPECIFICATION

(11) **EP 3 213 943 B1**
(45) Date of publication and mention of the grant of the patent: **01.04.2020**
(21) Application number: 15853766.2
(22) Date of filing: 07.09.2015
(51) Int. Cl.: B60G 21/055, B29C 65/10, B29C 65/44, B29C 65/48, B29C 65/46, B29C 65/00, B29C 65/78, B29L 31/30, B29L 31/00

(54) **APPARATUS AND METHOD FOR MANUFACTURING STABILIZER**
VORRICHTUNG UND VERFAHREN ZUR HERSTELLUNG EINES STABILISATORS
APPAREIL ET PROCÉDÉ DE FABRICATION DE STABILISATEUR

(30) Priority: 28.10.2014 JP 2014219302
(43) Date of publication of application: 06.09.2017
(73) Proprietor: NHK Spring Co., Ltd., Kanagawa 236-0004 (JP)
(72) Inventor: KURODA, Shigeru, Yokohama-city Kanagawa 236-0004 (JP); SUZUKI, Hiroaki, Yokohama-city Kanagawa 236-0004 (JP)
(74) Representative: Dehns
(86) International application number: PCT/JP2015/075312
(87) International publication number: WO 2016/067751

(56) References cited:
- EP-A2- 2 392 449
- DE-A1-102011 112 077
- JP-A- H04 223 911
- JP-A- H04 224 619
- JP-A- S63 273 541
- JP-A- 2006 290 313
- JP-A- 2006 290 313
- JP-A- 2006 522 214
- US-A- 4 122 321
- US-A- 4 781 054
- US-A- 6 092 643
- US-A1- 2005 155 702

## Description

The present invention relates to a technique for fixing a rubber bush to a stabilizer, the rubber bush being used for fixing the stabilizer to a vehicle body.

### [Background Art]

JP 4004512 B2 discloses a method for manufacturing a stabilizer bar with a rubber bush. According to a technique of JP 40004512 B2, while the rubber bush is pressed in a radial direction thereof by a pair of pressing members, heating portions of the stabilizer bar on both sides in an axial direction of the rubber bush by high-frequency induction heating causes an adhesive reaction of an adhesive applied to at least one of a fitting surface of the rubber bush and a fitted surface of the stabilizer bar.

US 2005/0155702 A1 discloses a method for manufacturing a stabilizer. The method involves placing an induction coil near a single stabilizer and, via induction heating, bonding together a metal part and a polymer molded part. JP 2006/290313 A1 discloses another method for manufacturing a stabilizer. The method comprises high-frequency induction heating on a single stabilizer bar to adhere a rubber bush to the bar.

However, according to the technique of JP 4004512 B2, the stabilizer bar with rubber bush is manufactured by inserting the stabilizer bar one by one from outside into a coil portion of a high-frequency induction heating device and by heating the portions of the stabilizer bar on both sides in the axial direction of the rubber bush. Therefore, in the technique of JP 4004512 B2, productivity of the stabilizer bar with rubber bush is generally low.

In view of such circumstances, an object of the present invention is to provide a stabilizer manufacturing apparatus and a stabilizer manufacturing method for improving productivity of a stabilizer with a rubber bush.

In order to solve the above problems, the present invention is a stabilizer manufacturing apparatus for manufacturing a stabilizer to which rubber bushes are heat-bonded, according to claim 1.

Further, a stabilizer manufacturing method according to claim 7 is provided.

According to the present invention, it is possible to provide a stabilizer manufacturing apparatus and a stabilizer manufacturing method for improving productivity of a stabilizer with a rubber bush.

FIG. 1 is a perspective view of a stabilizer and its vicinity in the present embodiment, the stabilizer being mounted on a vehicle body;
FIG. 2 is an overall perspective view of a stabilizer manufacturing apparatus of the present embodiment;
FIG. 3 is a view showing a state in which portions to be heated of the stabilizer are heated, and corresponds to a view in direction of arrow A in FIG. 2;
FIG. 4 is a graph showing a temperature change of the portion to be heated of the stabilizer which is conveyed from an inlet to an outlet of a curing furnace;
FIG. 5 is a view showing a state in which the portion to be heated of the stabilizer is heated when positions of the coils arranged with respect to the stabilizer are changed;
FIG. 6 is a view showing a state in which the portion to be heated of the stabilizer is heated when inclination of the coils with respect to the stabilizer is changed;
FIG. 7 is a view showing a state in which the portion to be heated of the stabilizer is heated when the coils have cores;
FIG. 8A is a graph showing a measurement result of a temperature change at specific portions P1 to P7 of a workpiece, when the portions to be heated of the stabilizer are heated under a predetermined heating condition, and the coils do not have cores; and
FIG. 8B is a graph showing a measurement result of a temperature change at the specific portions P1 to P7 of the workpiece, when the portions to be heated of the stabilizer are heated under the predetermined heating condition, and the coils have cores.

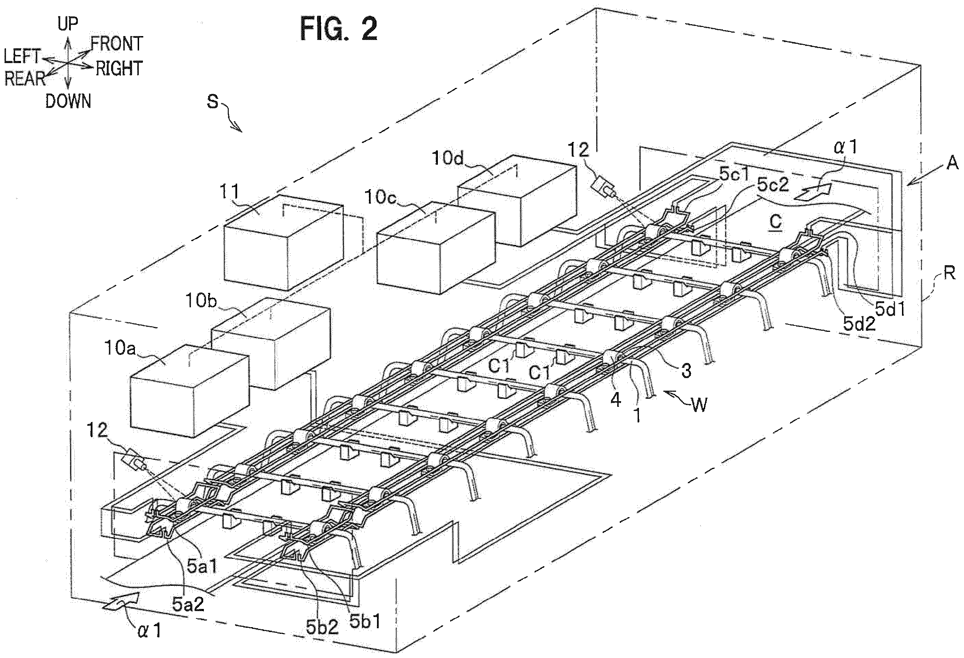

Hereinafter, embodiments of the present invention will be described, by way of example only. For convenience of description, a direction in which a workpiece W is conveyed is referred to as "front" (see FIG. 2), and other directions are shown in the drawings.

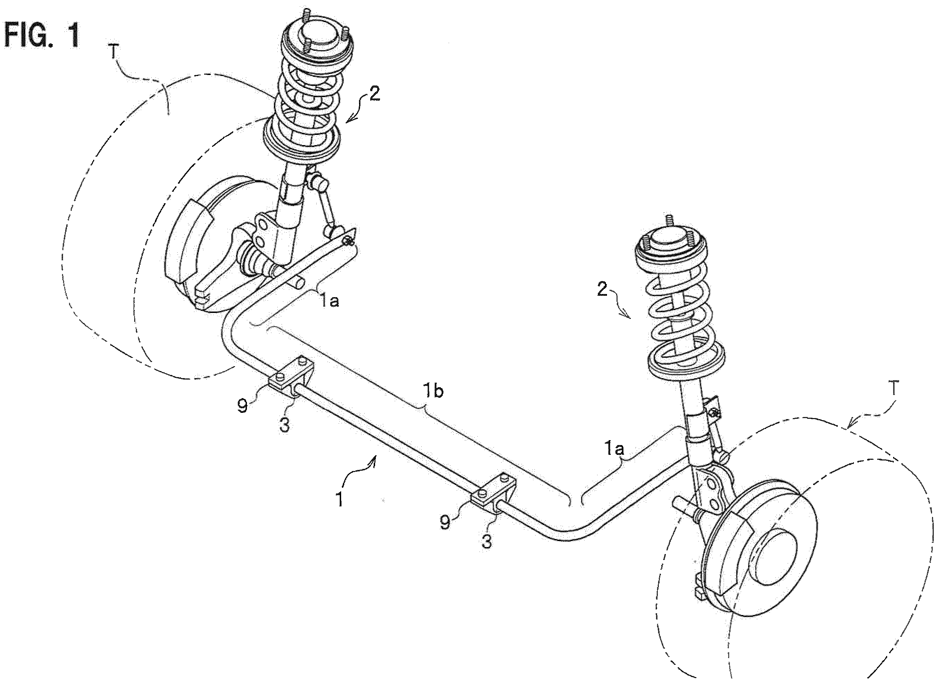

As shown in FIG. 1, a stabilizer 1 of the present embodiment is used to eliminate positional deviation of left and right wheels T of a vehicle (not shown).

The vehicle includes a pair of suspension devices 2 on the left and right wheels T and the stabilizer 1 to which the pair of suspension devices 2 is connected. For example, when the vehicle turns and a vehicle body (not shown) is inclined (roll phenomenon), the stabilizer 1 is torsionally deformed in response to the positional deviation of the left and right wheels T, and generates an elastic force for restoring the torsional deformation to prevent the roll phenomenon of the vehicle.

The stabilizer 1 is formed of, for example, spring steel. As the spring steel, it is possible to use, for example, SUP3, SUP6, SUP7, SUP9, SUP9A, SUP10, SUP11A, SUP12 and SUP13 defined in JIS G 4801, and SUP10 is most preferable among them.

The stabilizer 1 is substantially formed in a U-shape, and has left and right arm portions 1a respectively connected to a pair of left and right suspension devices 2, and a stabilizer bar 1b to be torsionally deformed and restored.

A pair of rubber bushes 3 separated from each other is bonded to a central portion of the stabilizer bar 1b. The rubber bush 3 is fixed to a bracket 9 with bolts, and the bracket 9 is fixed to the vehicle body with bolts. The rubber bush 3 is a cushioning material for absorbing or softening impact, vibration and the like applied to the left and right wheels T with respect to the vehicle body.

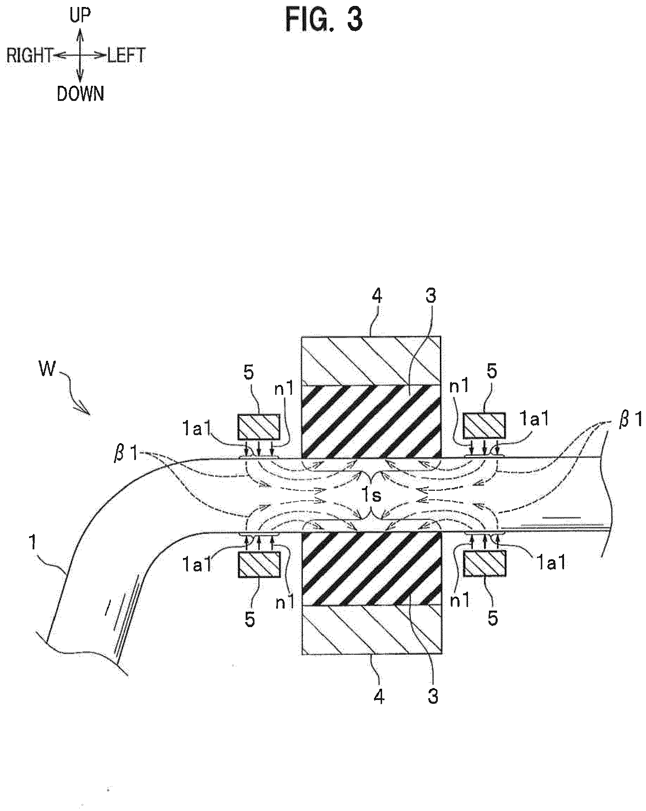

The stabilizer 1 to which the rubber bushes 3 are fixed by bonding is manufactured as follows. First, the stabilizer 1 is formed into a predetermined final shape (see FIG. 1) by using bar material or tubular material made of spring steel which is a material. Then, a surface of the material in the final shape of the stabilizer 1 is coated. A bonding location 1s (FIG. 3) of the material in the final shape to which the rubber bush 3 is bonded is formed with a primer layer, and a top coat layer is formed on the primer layer. The primer layer and the top coat layer formed on the stabilizer 1 constitute an adhesive layer. The bonding location 1s may be formed with a coating film of resin layer mainly composed of epoxy resin, and the adhesive layer may be constituted by the resin layer, the primer layer and the top coat layer.

Then, the pair of rubber bushes 3 are pressed and fixed by clamp jigs 4 (FIGS. 2, 3) to two bonding locations 1s separated from each other at the central portion of the stabilizer 1. The stabilizer 1 is conveyed into a curing furnace R (FIG. 2) while the rubber bushes 3 are pressed and bent by the clamp jigs 4, and is subjected to a curing step of heat-bonding by high-frequency induction heating.

In the curing step, coating applied to a material surface of the stabilizer 1 and the primer layer are joined by anchor effect, inter molecular bonding or the like. Further, the primer layer and the top coat layer are joined by ionic bonding. Then, the top coat layer on the material surface of the stabilizer 1 and the rubber bush 3 are securely joined by vulcanization reaction, and the rubber bush 3 is bonded to the stabilizer 1.

As shown in FIG. 2, a stabilizer manufacturing apparatus S includes a curing furnace R, a conveyor C (conveying device), power supply devices 10 (10a, 10b, 10c, 10d), a control unit 11, temperature sensors 12, 12, and coils 5 (5a1, 5a2, 5b1, 5b2, 5c1, 5c2, 5dl, 5d2).

The curing furnace R is a furnace for performing high-frequency induction heating on the workpiece W. The workpiece W of the present embodiment is the stabilizer 1 with the rubber bushes 3 which are pressure-bonded by the clamp jigs 4.

The conveyor C is a device for continuously conveying a predetermined number of workpieces W placed on a manufacturing line in a forward direction (conveying direction: α1) to pass them through the curing furnace R. The conveyor C includes, for example, an endless loop belt which is stretched and cyclically driven by rollers. The conveyor C includes a plurality of pairs of mounting portions C1 extending outside the belt on an outer surface of the belt. The mounting portions C1 are portions on which the workpiece W conveyed by the conveyor C is placed while being kept horizontal. One end of the mounting portion C1 is formed with a V-shaped groove receiving a portion of the central portion of the stabilizer 1 from below.

The power supply devices 10 are devices for supplying power to the coils 5. The power supply device 10 includes, for example, an AC power supply, an oscillator, a matching box and a transformer, and supplies power of a predetermined magnitude to the coil 5. The power supply device 10a supplies power to the coils 5a1, 5a2 respectively disposed above and below the workpiece W conveyed by the conveyor C. The power supply device 10b supplies power to the coils 5b1, 5b2 respectively disposed above and below the workpiece W conveyed by the conveyor C. The power supply device 10c supplies power to the coils 5c1, 5c2 respectively disposed above and below the workpiece W conveyed by the conveyor C. The power supply device 10d supplies power to the coils 5d1, 5d2 respectively disposed above and below the workpiece W conveyed by the conveyor C. Further, the power supply device 10 includes a known cooling device for cooling the coil 5 heated by high-frequency induction heating by flowing cooling fluid into a hollow portion of the coil 5.

The control unit 11 is a device for controlling power supplied to the coils 5 by the power supply devices 10. The control unit 11 includes a control panel mounted with a predetermined element for controlling power supplied by the power supply device 10. The control unit 11 is electrically connected to temperature sensors 12 and determines a magnitude of power supplied to the coils 5 based on temperature detection signals detected by the temperature sensors 12.

The temperature sensors 12 detect temperatures of specific portions of the workpiece W. The specific portions of the workpiece W are, for example, portions 1a1 to be heated of the stabilizer 1 (FIG. 3). The temperature sensor 12 is, for example, a radiation thermometer for measuring an intensity of visible light or infrared light radiated from an object.

When power is supplied from the power supply device 10 to the coil 5 to be energized, the coil 5 generates a magnetic field on the workpiece W, to perform high-frequency induction heating. The coil 5 is, for example, made of copper and has a pipe-shaped hollow portion through which the cooling fluid from the cooling device flows. The coils 5a1, 5a2 are arranged near an inlet inside the curing furnace R and on the left side of the conveyor C. The coils 5b1, 5b2 are arranged near the inlet inside the curing furnace R and on the right side of the conveyor C. The coils 5c1, 5c2 are arranged in front of the coils 5a1, 5a2 (downstream of the coils 5a1, 5a2) inside the curing furnace R and on the left side of the conveyor C. The coils 5d1, 5d2 are arranged in front of the coils 5b1, 5b2 (downstream of the coils 5b1, 5b2) inside the curing furnace R and on the right side of the conveyor C. Each of the coils 5a1, 5a2, 5b1, 5b2, 5c1, 5c2, 5d1, 5d2 is fixed in position and inclination by a predetermined fixing jig (not shown) in the curing furnace R. Further, as shown in FIG. 2, each of the coils 5a1, 5a2, 5b1, 5b2, 5c1, 5c2, 5d1, 5d2 is slightly spaced above or below the stabilizer 1 conveyed by the conveyor C.

The coils 5a1, 5a2, 5b1, 5b2 shown in FIG. 2 are heating coils for heating the portions 1a1 to be heated (FIG. 3) of the stabilizer 1 to a predetermined temperature. Lengths of portions extending in a front-rear direction of the coils 5a1, 5a2, 5b1, 5b2 are set to a length required to heat the portions 1a1 to be heated (FIG. 3) of the stabilizer 1 to the predetermined temperature for one workpiece W conveyed at a predetermined speed.

The coils 5c1, 5c2, 5dl, 5d2 are warming coils for maintaining the portions 1a1 to be heated (FIG. 3) of the stabilizer 1 at the predetermined temperature by turning on and off power supply. Lengths of portions extending in a front-rear direction of the coils 5c1, 5c2, 5d1, 5d2 are set to, for example, a length corresponding to a time required for sufficiently performing heat-bonding of the adhesive layer applied to the bonding location 1s (FIG. 3) of the stabilizer 1, when a predetermined number of workpieces W are conveyed at the predetermined speed. The length of the portions extending in the front-rear direction of the coils 5c1, 5c2, 5d1, 5d2 is preferably longer than the length of portions extending in the front-rear direction of the coils 5a1, 5a2, 5b1, 5b2.

### (High-frequency induction heating)

As shown in FIG. 3, four portions extending in the front-rear direction of an upper and lower pair of coils 5 are arranged at four positions, which are on left and right sides of the rubber bush 3 which is pressure-bonded by the clamp jig 4 of the workpiece W to be conveyed, and on upper and lower sides of the stabilizer 1. Portions of the stabilizer 1 facing away from the coils 5 by a predetermined distance are subjected to magnetic flux n1 from the energized coils 5 to be heated by high-frequency induction heating. That is, the portions of the stabilizer 1 facing away from the coils 5 by the predetermined distance are the portions 1a1 to be heated by high-frequency induction heating. The portions 1a1 to be heated are in the vicinity of the bonding location 1s of the stabilizer 1. Although a portion of the magnetic flux from the coils 5 theoretically acts on the clamp jig 4, influence of an action on the clamp jig 4 is much smaller than that on the portions 1a1 to be heated.

The predetermined distance between the coil 5 and the portion 1a1 to be heated is preferably made as small as possible in order to efficiently generate heat by high-frequency induction heating. Therefore, as shown in FIG. 2, a front portion and a rear portion of each of the coils 5a1, 5a2, 5b1, 5b2, 5c1, 5c2, 5d1, 5d2 have a shape away from the clamp jig 4 and the rubber bush 3 of the workpiece W conveyed in the curing furnace R.

The portion 1a1 to be heated is heated to the predetermined temperature according to the number of magnetic fluxes n1 from the coil 5, that is, the magnitude of power from the power supply device 10. A portion of heat which has heated the portion 1a1 to be heated is transferred (arrows β1) to the bonding location 1s of the stabilizer 1 to heat the bonding location 1s. By heating the bonding location 1s, the adhesive layer applied to the bonding location 1s is heated, so that an adhesive reaction of the adhesive layer occurs. As a result, the stabilizer 1 and the rubber bush 3 are heat-bonded to each other.

### (Bonding method)

Next, a bonding method using the stabilizer manufacturing apparatus S of the present embodiment will be described. The workpiece W to be conveyed by the conveyor C is prepared in advance. In particular, the adhesive layer is formed (applied) on the bonding location 1s of the stabilizer 1, and the rubber bush 3 is positioned at the bonding location 1s. It is also possible to form an adhesive layer on an inner wall of the rubber bush 3, that is, on a portion in close contact with the bonding location 1s of the stabilizer 1, and to position the rubber bush 3 at the bonding location 1s of the stabilizer 1. Then, the clamp jig 4 is attached to the rubber bush 3 from outside in a radial direction of the stabilizer bar 1b, to pressure-bond the rubber bush 3. The workpieces W prepared in this manner are placed one by one on the mounting portions C1 of the conveyor C.

As shown in FIG. 2, the coils 5a1, 5a2, 5b1, 5b2, 5c1, 5c2, 5d1, 5d2 are placed in advance using predetermined fixing jigs with respect to the conveyor C in the curing furnace R. At this time, each position of the coils 5a1, 5a2, 5b1, 5b2, 5c1, 5c2, 5d1, 5d2 is a position spaced at the predetermined distance above or below each of the four portions 1a1 to be heated of the stabilizer 1 of the workpiece W conveyed into the curing furnace R.

Next, the respective power supply devices 10a, 10b, 10c, 10d supplies power to the corresponding coils 5a1, 5a2, 5b1, 5b2, 5c1, 5c2, 5d1, 5d2. Power supplied to each of the coils 5a1, 5a2, 5b1, 5b2, 5c1, 5c2, 5d1, 5d2 is determined by the control unit 11.

Next, the conveyor C forwardly conveys the workpiece W mounted on the mounting portions C1 into the curing furnace R.

Each of the coils 5a1, 5a2, 5b1, 5b2 generates a magnetic field in a corresponding portion 1a1 to be heated of the stabilizer 1, to heat the portion 1a1 to be heated to raise its temperature. A portion of heat which has heated the portion 1a1 to be heated is transferred to the bonding location 1s of the stabilizer 1 to heat the adhesive layer formed on the bonding location 1s. Then, each of the coils 5c1, 5c2, 5d1, 5d2 generates a magnetic field in a corresponding portion 1a1 to be heated of the stabilizer 1, to heat the portion 1a1 to be heated as necessary to maintain its temperature. A portion of heat which has heated the portion 1a1 to be heated is transferred to the bonding location 1s of the stabilizer 1 to heat the adhesive layer formed on the bonding location 1s.

In particular, the workpiece W conveyed from the inlet of the curing furnace R by the conveyor C passes between an upper and lower pair of coils 5a1, 5a2 and between an upper and lower pair of the coils 5b1, 5b2 at a conveying speed of the conveyor C. The portion 1a1 to be heated of the stabilizer 1 in the vicinity of the rubber bush 3 on the left side is exposed to a magnetic flux n1 from the coils 5a1, 5a2 for a predetermined time, to generate heat by high-frequency induction heating. Meanwhile, the portion 1a1 to be heated of the stabilizer 1 in the vicinity of the rubber bush 3 on the right side is exposed to a magnetic flux n1 from the coils 5b1, 5b2 for the predetermined time, to generate heat by high-frequency induction heating.

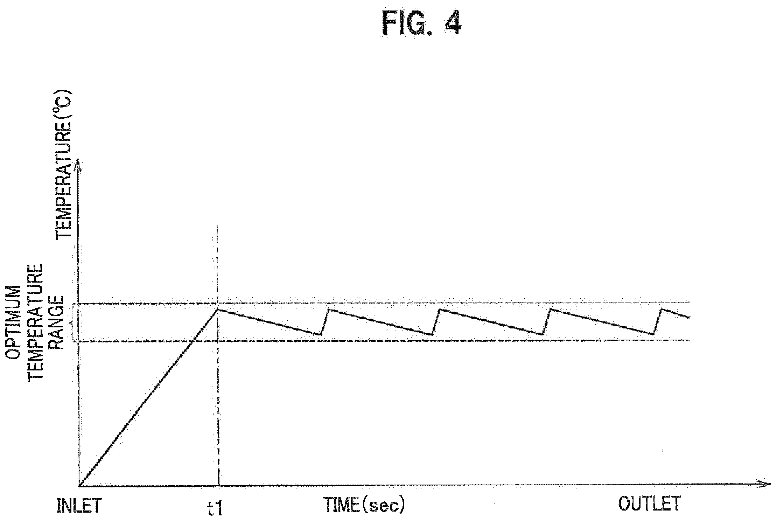

The predetermined time is determined by various factors such as a material and shape of the stabilizer 1 and a material and position of the rubber bush 3, and is, for example, 15 seconds. As a result, the portion 1a1 to be heated is heated to a temperature within an optimum temperature range. FIG. 4 shows how a temperature of the portion 1a1 to be heated is raised to the temperature within the optimum temperature range by a time t1 corresponding to the predetermined time after the stabilizer is conveyed to the inlet of the curing furnace R. The temperature within the optimum temperature range is determined by various factors such as the material and shape of the stabilizer 1 and the material and position of the rubber bush 3, and is, for example, 120°C to 200°C. Since the temperature of the portion 1a1 to be heated only has to reach the optimum temperature range, the temperature of the portion 1a1 to be heated at the time t1 may be, for example, as shown in FIG. 4, a temperature slightly lower than an upper limit of the optimum temperature range.

The temperature sensor 12 detects the temperature of the portion 1a1 to be heated of the stabilizer 1 passing a front portion (downstream) of the coils 5a1, 5a2. The temperature detection signal indicating the detected temperature is transmitted to the control unit 11. The control unit 11 can determine whether the adhesive layer formed on the bonding location 1s is properly heated based on the received temperature detection signal. If not successful, the control unit 11 changes the magnitude of power supplied from the power supply devices 10a, 10b, to set the temperature of the portion 1a1 to be heated to the temperature within the optimum temperature range, or to change the temperature to a temperature different from the temperature within the optimum temperature range as necessary.

The workpiece W, which has passed the front portion of the coils 5a1, 5a2 by conveyor C, passes between an upper and lower pair of coils 5c1, 5c2 and between an upper and lower pair of coils 5d1, 5d2 at the conveying speed of the conveyor C. The control unit 11 repeatedly controls to turn on and off power supplied from the power supply devices 10c, 10d. Therefore, the portion 1a1 to be heated of the stabilizer 1 in the vicinity of the rubber bush 3 on the left side is intermittently exposed to a magnetic flux n1 from the coils 5c1, 5c2 for a predetermined time, to generate heat by high-frequency induction heating. Meanwhile, the portion 1a1 to be heated of the stabilizer 1 in the vicinity of the rubber bush 3 on the right side is intermittently exposed to a magnetic flux n1 from the coils 5d1, 5d2 for the predetermined time, to generate heat by high-frequency induction heating.

The predetermined time is determined by various factors such as the material and shape of the stabilizer 1 and the material and position of the rubber bush 3, and is, for example, 10 seconds to 180 seconds. As a result, the portion 1a1 to be heated is maintained at the temperature within the optimum temperature range. FIG. 4 shows how the temperature of the portion 1a1 to be heated is maintained at the temperature within the optimum temperature range by turning on and off power supply to the coils 5c1, 5c2, 5d1, 5d2 during a period from the time t1 when heating to the temperature within the optimum temperature range is completed until the stabilizer reaches an outlet of the curing furnace R. While the power supply is off, the temperature of the portion 1a1 to be heated gradually decreases due to heat radiation. On the other hand, while the power supply is on, the temperature of the portion 1a1 to be heated rapidly rises by high-frequency induction heating. During the period from the time t1 until the stabilizer reaches the outlet of the curing furnace R, since the temperature of the portion 1a1 to be heated only has to be within the optimum temperature range, for example, as shown in FIG. 4, when the power supply is turned on, the temperature of the portion 1a1 to be heated may rise to the temperature slightly lower than the upper limit of the optimum temperature range, and when the power supply is turned off, the temperature of the portion 1a1 to be heated may decrease to a temperature slightly higher than a lower limit of the optimum temperature range.

The temperature sensor 12 detects the temperature of the portion 1a1 to be heated of the stabilizer 1 passing the front portion (downstream) of the coils 5c1, 5c2. The temperature detection signal indicating the detected temperature is transmitted to the control unit 11. The control unit 11 can determine whether the adhesive layer formed on the bonding location 1s is properly heated based on the received temperature detection signal. If not successful, the control unit 11 changes the magnitude of power supplied from the power supply devices 10c, 10d or changes a duty ratio of the power supply, to maintain the temperature of the portion 1a1 to be heated at the temperature within the optimum temperature range, or to maintain the temperature at a temperature different from the temperature within the optimum temperature range as necessary (for example, when the adhesive layer applied to the bonding location 1s of the stabilizer 1 reaching the front portion of the conveyor C is heated more than necessary, or when the heating is insufficient).

The workpiece W, which has passed the front portion of the coils 5c1, 5c2, 5d1, 5d2 and comes out of the curing furnace R, is a workpiece in which the adhesive layer of the bonding location 1s is optimally heat-bonded by heat transfer from the portion 1a1 to be heated.

### (Changing position and inclination of coil 5)

There are various shapes of the stabilizer and various mounting positions of the rubber bush (various positions of the rubber bush to be heat-bonded to the stabilizer) depending on the type of vehicle. The coil 5 in the curing furnace R is configured to appropriately change its position and inclination so as to correspond to the stabilizer with the rubber bush having various structures depending on the type of vehicle. The changed position and inclination of the coil 5 is preferably fixed by the predetermined fixing jig (not shown).

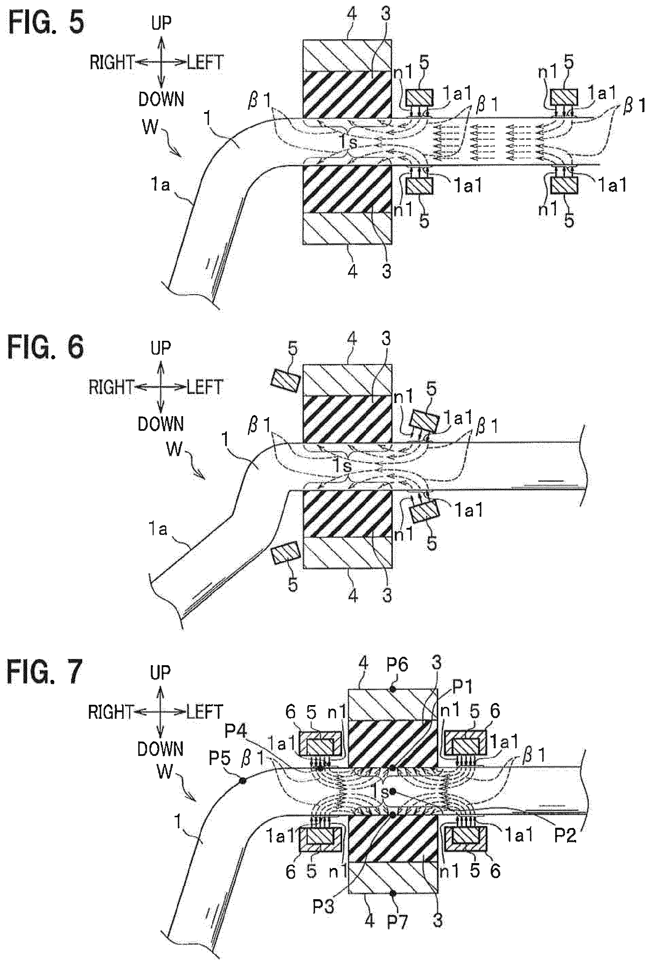

For example, as shown in FIG. 5, a case in which the rubber bush 3 is mounted on the right side near the arm portion 1a of the stabilizer 1 as compared to the stabilizer 1 with the rubber bush 3 shown in FIG. 3 will be described. In this case, it is not possible to place the coil 5 on the right side of the rubber bush 3 because the arm portion 1a and the coil 5 overlap each other. Therefore, as shown in FIG. 5, the coils 5 are arranged horizontally only on the left side of the rubber bush 3 and spaced at the predetermined distance above and below the stabilizer 1, and thus the adhesive layer of the bonding location 1s is heat-bonded by heat transfer of high-frequency induction heating only from the left side of the rubber bush 3.

Further, for example, as shown in FIG. 6, when the shape of the arm portion 1a of the stabilizer 1 is complicated, it is not possible to place the coil 5 on the right side of the rubber bush 3 because the arm portion la and the coil 5 overlap each other. Therefore, as shown in FIG. 6, by tilting the coils 5 to keep them away from the arm portion 1a, a portion of the coils 5 is placed near the portion 1a1 to be heated of the stabilizer 1 on the left side of the rubber bush 3.

As compared to a case in which heat is transferred from the left and right sides of the rubber bush 3 as shown in FIG. 3, it generally takes much time to heat-bond the adhesive layer when the coils are arranged as shown in FIG. 5, or when the coils 5 are tilted as shown in FIG. 6. However, in such a case, it is possible to realize optimum heat-bonding of the adhesive layer, for example, by reducing the conveying speed of the conveyor C.

### (Core 6)

As shown in FIG. 7, U-shaped cores 6 in front view surrounding a periphery of the coil 5 other than a portion facing the stabilizer 1 conveyed by the conveyor C can be attached to the four portions of the coils 5 extending in the front-rear direction. The core 6 is made of a material such as a Ferrotron, a silicon steel plate and a poly iron core having a high magnetic permeability. By attaching the core 6 to the coil 5, it is possible to prevent spreading of magnetic flux from the coil 5 to portions other than the portion 1a1 to be heated of the stabilizer 1, and to collect and increase the magnetic flux n1 from the coil 5 to the portion 1a1 to be heated of the stabilizer 1. As a result, it is possible to improve heating efficiency of the portion 1a1 to be heated as compared to a case in which the core 6 is not used as shown in FIG. 3.

Since Ferrotron has a high magnetic permeability over a wide range of magnetic flux density and over a wide range of magnetic field, it greatly improves utilization efficiency of thermal energy by high-frequency induction heating. Therefore, by using Ferrotron as a material for the core 6, it is possible to greatly improve production rate and repeatability of the stabilizer 1 with the rubber bush 3.

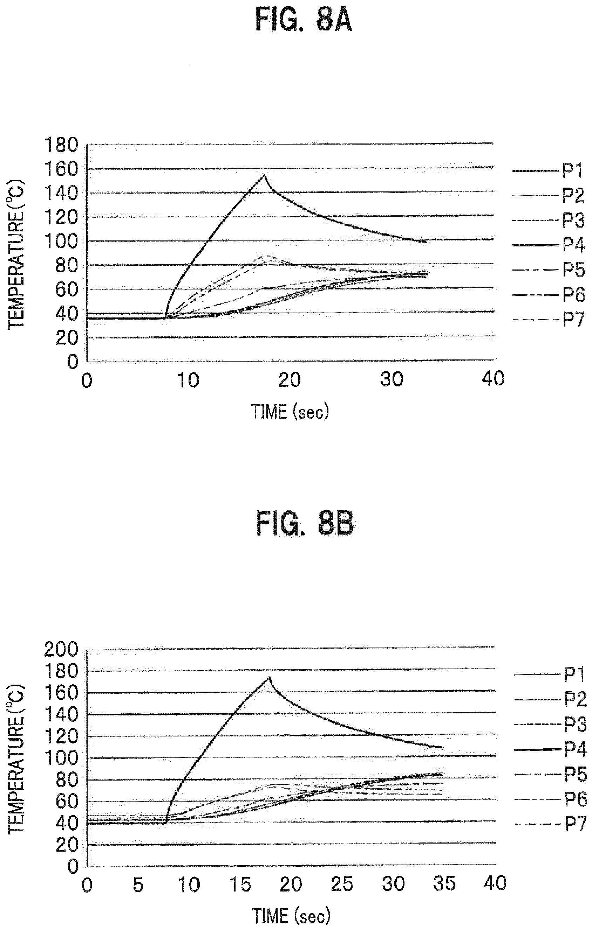

FIG. 8B is an experimental result showing efficiency of high-frequency induction heating when the core 6 is used. Thermocouples are attached to specific points P1 to P7 shown in FIG. 7, and temperatures at the specific points P1 to P7 are measured when high-frequency induction heating is performed. As a comparative example, also when the core is not used in the workpiece W as in FIG. 3, temperatures at the same specific points P1 to P7 are measured.

A specific point P1 of FIG. 7 is an upper surface portion of the stabilizer 1 surrounded by the clamp jig 4. A specific point P2 is a front surface portion (in front of a paper surface of FIG. 7) of the stabilizer 1 surrounded by the clamp jig 4. A specific point P3 is a lower surface portion of the stabilizer 1 surrounded by the clamp jig 4. A specific point P4 is an upper surface portion of the stabilizer 1 facing the coil 5. A specific point P5 is an upper surface portion of the stabilizer 1 away from the coil 5. A specific point P6 is an upper surface of the clamp jig 4. A specific point P7 is a lower surface of the clamp jig 4. Heating conditions of high-frequency induction heating by the coil 5 are heating time: 10 seconds, set value (target value) of current: 120 A, current: 116 A, voltage: 93 V, power: 10 kW and frequency: 22 kHz.

As shown in FIGS. 8A, 8B, a temperature of the specific point P4 (peak temperature: about 170°C) when the core 6 is used (FIG. 8B), is significantly higher than a temperature of the specific point P4 (peak temperature: about 150°C) when the core 6 is not used (FIG. 8A). This difference is due to the fact that the magnetic flux n1 from the coil 5 to the portion 1a1 to be heated of the stabilizer 1 is intensively increased by the core 6.

An increase in temperature of the specific points P1 to P3, P5 to P7 when the core 6 is used (FIG. 8B), is generally reduced as compared to an increase in temperature of the specific points P1 to P3, P5 to P7 when the core 6 is not used (FIG. 8A). This difference is due to the fact that the magnetic flux n1 from the coil 5 to the portions other than the portion 1a1 to be heated of the stabilizer 1 is significantly reduced by the core 6.

That is, by using the core 6, the point to be heated (specific point P4) by high-frequency induction heating is heated more, and the points to be prevented from being excessively heated (specific points P1 to P3, P5 to P7) by high-frequency induction heating is heated less. Therefore, according to measurement results of FIGS. 8A, 8B, it is proven to be useful that the stabilizer manufacturing apparatus S of the present embodiment includes the core 6.

### «Summary»

According to the present embodiment, the stabilizer manufacturing apparatus S continuously forwardly conveys the workpiece W, which is the stabilizer 1 with the rubber bush 3, by the conveyor C. Further, in the stabilizer manufacturing apparatus S, the coils 5a1, 5a2, 5b1, 5b2, 5c1, 5c2, 5d1, 5d2 are spaced at the predetermined distance above and below the portions 1a1 to be heated of the predetermined number of stabilizers 1 conveyed (FIG. 2). Therefore, for a plurality of workpieces W, the stabilizer manufacturing apparatus S can heat the adhesive layer formed on the bonding location 1s of the stabilizer 1 by heat transfer, and can heat-bond the rubber bush 3 to the stabilizer 1. Since the rubber bush 3 is not directly heated by high-frequency induction heating, thermal degradation of the rubber bush 3 itself is negligibly small. Further, as compared to a conventional technique of heating the entire curing furnace to heat an object to be heated conveyed by the conveyor, heating by high-frequency induction heating is extremely useful from a viewpoint of utilization efficiency of thermal energy. Therefore, since it is configured such that the stabilizer 1 with the rubber bush 3 is continuously conveyed in the forward direction, it is possible to provide a stabilizer manufacturing apparatus and a stabilizer manufacturing method for improving productivity of a stabilizer with a rubber bush.

Further, since the coils 5a1, 5a2, 5b1, 5b2 on the inlet side of the curing furnace R are used for raising temperature, and the coils 5c1, 5c2, 5d1, 5d2 downstream of the oils 5al, 5a2, 5b1, 5b2 are used for maintaining temperature, it is possible to simplify a structure for heating the adhesive layer for a desired time at a temperature within the optimum temperature range.

Further, since the position and inclination of the coils 5a1, 5a2, 5b1, 5b2, 5c1, 5c2, 5d1, 5d2 can be appropriately changed, the coils 5a1, 5a2, 5b1, 5b2, 5c1, 5c2, 5d1, 5d2 can be separated by the predetermined distance from the portions 1a1 to be heated for the workpieces W having various structures depending on the type of vehicle. Therefore, regardless of the structure of the workpiece W, it is possible to reliably heat the portion 1a1 to be heated by high-frequency induction heating.

Further, by attaching the core 6 to the coil 5, it is possible to improve heating efficiency of the portion 1a1 to be heated of the stabilizer 1.

Further, since the stabilizer manufacturing apparatus S includes the temperature sensor 12, it is possible to determine whether the adhesive layer formed on the bonding location 1s is properly heated by heat transfer from the portion 1a1 to be heated of the stabilizer 1. Therefore, if not successful, the control unit 11 can improve heating of the adhesive layer by feedback control of power supply from the power supply devices 10 to the coils 5. As a result, it is possible to reduce the number of defective products in a product group produced by the stabilizer manufacturing apparatus S.

Further, since the stabilizer manufacturing apparatus S includes the curing furnace R, most part of heat heating the portion 1a1 to be heated by high-frequency induction heating is transferred to the bonding location 1s of the stabilizer 1 because of sealability of the curing furnace R. Therefore, it is possible to improve heating efficiency of the adhesive layer.

### «Others»

In the present embodiment, the conveyor C is used as a conveying device of the workpiece W. However, for example, a walking beam or a load/unload robot may be used as the conveying device.

Further, unlike conventional techniques for heating the entire curing furnace, the present embodiment can heat only a portion to be heated of an object by high-frequency induction heating, and is not greatly affected by the environment. Therefore, the stabilizer manufacturing apparatus S need not include the curing furnace R for providing a space with high airtightness, and may include, for example, a structure (an indoor structure) for providing a space with relatively low airtightness.

Further, in the present embodiment, the high-frequency induction heating is performed using the coils 5a1, 5a2, 5bl, 5b2 for raising temperature, and the coils 5c1, 5c2, 5d1, 5d2 for maintaining temperature. However, one coil may be used for raising temperature and maintaining temperature. For example, the control unit 11 controls the power supply device to supply power of a predetermined magnitude to the coil for raising temperature and maintaining temperature at a predetermined timing, so that the rubber bush 3 is reliably heat-bonded to the stabilizer 1 conveyed in the curing furnace R.

Further, in the present embodiment, power supplied to the coils 5cl, 5c2, 5d1, 5d2 for maintaining temperature is repeatedly controlled or turned on and off based on temperature detection signals detected by the temperature sensors 12. However, this repetitive control of turning on and off may be, for example, a control in which a predetermined on-time and a predetermined off-time are determined by a timer. In this case, the stabilizer manufacturing apparatus S need not include the temperature sensor 12.

Further, the number of the temperature sensors 12 provided in the stabilizer manufacturing apparatus 12 is not limited to two as in the present embodiment, but may be one or more than two. A target to be detected by one temperature sensor 12 is not limited to the portion 1a1 to be heated of the workpiece W reaching the front portion of the coils 5a1, 5a2, 5b1, 5b2 as in the present embodiment, but may be, for example, the portion 1a1 to be heated of the workpiece W reaching a rear portion or a middle portion of the coils 5a1, 5a2, 5b1, 5b2. A target to be detected by the other temperature sensor 12 is not limited to the portion 1a1 to be heated of the workpiece W reaching the front portion of the coils 5c1, 5c2, 5dl, 5d2 as in the present embodiment, but may be, for example, the portion 1a1 to be heated of the workpiece W reaching a rear portion or a middle portion of the coils 5c1, 5c2, 5d1, 5d2. In addition, a target to be detected by the temperature sensors 12 is not limited to the portion 1a1 to be heated of the workpiece W, but may be any portion of the workpiece W.

Further, in the present embodiment, the coils 5a1, 5a2, 5b1, 5b2, 5c1, 5c2, 5dl, 5d2 are fixed in desired position and inclination by the fixing jigs (not shown) while the workpiece W is being conveyed by the conveyor C. However, the fixing jigs may include actuators, so that the fixing jigs can appropriately change the position and inclination of the coils 5a1, 5a2, 5b1, 5b2, 5cl, 5c2, 5d1, 5d2 even while the workpiece W is being conveyed.

Further, in the present embodiment, the portions 1a1 to be heated are portions of the stabilizer bar 1b on left and right sides of the rubber bush 3, that is, side surfaces of a cylinder which is not bent. However, the portions 1a1 to be heated may be, for example, bent portions which are boundaries between the stabilizer bar 1b and the arm portions 1a. In this case, the coils 5al, 5a2, 5b1, 5b2, 5c1, 5c2, 5d1, 5d2 may be appropriately changed in position and inclination depending on shapes of the bent portions 1a1 to be heated, or predetermined distances between the portions 1a1 to be heated and the coils 5a1, 5a2, 5b1, 5b2, 5c1, 5c2, 5d1, 5d2 which are separated from each other may be appropriately changed.

Further, as shown in FIG. 7, in the present embodiment, the core 6 surrounds all portions (in upper, left and right three directions) of the periphery of the coil 5 other than the portion facing the stabilizer 1 conveyed by the conveyor C. However, the core 6 may surround portions in one or more directions of the periphery of the coil 5 other than the portion facing the stabilizer 1 conveyed by the conveyor C. For example, the core 6 may surround only left, only right, only upper, left and upper, left and right, or upper and right portions of the coil 5. Thus, it is possible to achieve a desired magnitude or direction of the magnetic flux from the coil 5, and to reduce material cost of the core 6.

Further, in the present embodiment, by the coils 5a1, 5a2, 5bl, 5b2, 5c1, 5c2, 5d1, 5d2, the temperature of the portions 1a1 to be heated is raised to and maintained at the temperature in the optimum temperature range. However, the temperature only has to be within a temperature range in which bonding by the adhesive layer is achieved. Therefore, the temperature of the portion 1a1 to be heated may be higher than the upper limit of the optimum temperature range, or may be lower than the lower limit of the optimum temperature range.

Furthermore, shape, material, function or the like of components can be appropriately changed without departing from the scope of the present invention as defined by the claims.

### [Reference Signs List]

- 1:: stabilizer
- 3:: rubber bush
- 4:: clamp jig
- 5:: coil
- 5al, 5a2, 5b1, 5b2:: coil (first coil)
- 5c1, 5c2, 5d1, 5d2:: coil (second coil)
- 6:: core
- 10, 10a, 10b, 10c, 10d:: power supply device
- 11:: control unit
- 12:: temperature sensor
- 1s:: bonding location
- 1a1:: portion to be heated
- R:: curing furnace
- S:: stabilizer manufacturing apparatus
- C:: conveyor (conveying device)

## Claims

1. A stabilizer manufacturing apparatus (S) for manufacturing a stabilizer (1) to which rubber bushes (3) are heat-bonded, comprising:
a conveyor (C) for conveying the stabilizer (1) on a clamp jig (4) in a conveying direction, the rubber bushes (3) being pressure-bonded to bonding locations (1s) on the stabilizer (1) on which an adhesive layer is formed;
power supply devices (10) for respectively supplying power to coils (5) used in high-frequency induction heating; and
the coils (5) for respectively heating portions to be heated by generating a magnetic field in the portions to be heated near the bonding locations (1s) on the stabilizer, wherein
the coils (5) are respectively separated by a predetermined distance from the corresponding portions to be heated of a predetermined number of stabilizers conveyed in the conveying direction,
wherein the coils (5) comprise an upper and lower pair of coils having four portions arranged at four positions on the left and right sides of the rubber bush and on upper and lower sides of the stabilizer, in the conveying direction,
the coils (5) extend in the conveying direction and across the stabilizer (1) and each have a front portion and a rear portion aligned with a rubber bush (3) being conveyed, and
wherein the front portion and the rear portion each have such a bent shape such that the rubber bush (3) and clamp jig (4) are spaced apart from the front portion and rear portion while being conveyed by the conveyor (C) in the conveying direction.

2. The stabilizer manufacturing apparatus (S) according to claim 1, wherein
the coils (5) comprises first coils and second coils arranged downstream of the first coils in the conveying direction,
the first coils heat the portions to be heated of the stabilizer (1) conveyed in the conveying direction, to raise temperatures of the portions to be heated to temperatures within a temperature range in which bonding by the adhesive layers is achieved on the bonding locations, and
the second coils heat the portions to be heated of the stabilizer (1) conveyed in the conveying direction, to maintain temperatures of the portions to be heated within the temperature range.

3. The stabilizer manufacturing apparatus (S) according to claim 1 or 2, wherein when the coils (5) are respectively arranged at the predetermined distance from the corresponding portions to be heated of the stabilizer (1) conveyed in the conveying direction, positions or inclinations of the coils are appropriately changed depending on a shape of the stabilizer (1) and locations of the rubber bushes (3) heat-bonded to the stabilizer (1).

4. The stabilizer manufacturing apparatus (S) according to any one of claims 1 to 3, wherein the coils (5) have cores surrounding a periphery in at least one direction of the coil (5) other than a portion facing the stabilizer (1) conveyed in the conveying direction.

5. The stabilizer manufacturing apparatus (S) according to any one of claims 1 to 4, further comprising one or a plurality of temperature sensors (12) for detecting temperature of the portions to be heated of the stabilizer (1) conveyed in the conveying direction.

6. The stabilizer manufacturing apparatus (S) according to any one of claims 1 to 5, further comprising a curing furnace (R) in which the high-frequency induction heating is performed.

7. A stabilizer manufacturing method for manufacturing a stabilizer (1) to which rubber bushes (3) are heat-bonded, comprising the following steps:
an arrangement step in which, while a predetermined number of stabilizers (1) are conveyed by a conveyor (C), the rubber bushes (3) being pressure-bonded to bonding locations (1s) on the stabilizer (1) on which an adhesive layer is formed, coils (5) used for high-frequency induction heating are respectively arranged at a predetermined distance from portions to be heated of the predetermined number of stabilizers (1), the portions to be heated being in the vicinity of the bonding locations;
a conveying step in which the conveyor (C) conveys the stabilizers (1), each on a clamp jig (4), in a conveying direction;
a power supplying step in which power supply devices (10) supply power to the coils (5); and
a heating step in which the coils (5) heat the portions to be heated by generating a magnetic field in the portions to be heated of the stabilizers (1) conveyed in the conveying direction,
wherein the coils (5) comprise an upper and lower pair of coils having four portions arranged at four positions on the left and right sides of the rubber bush and on upper and lower sides of the stabilizer, in the conveying direction,
wherein the coils (5) extend in the conveying direction and across the stabilizer (1) and each have a front portion and a rear portion aligned with a rubber bush (3) being conveyed, and
wherein the front portion and the rear portion each have such a bent shape such that the rubber bush (3) and clamp jig (4) are spaced apart from the front portion and rear portion while being conveyed by the conveyor (C) in the conveying direction.

8. The stabilizer manufacturing method according to claim 7, further comprising:
a temperature raising step of heating the portions to be heated to a temperature within a temperature range in which bonding by the adhesive layers is achieved on the bonding locations; and
a temperature maintaining step of maintaining temperature of the portions to be heated within the temperature range at a subsequent stage of the temperature raising step.

## Patentansprüche

1. Stabilisatorherstellungseinrichtung (S) zum Herstellen eines Stabilisators (1), an dem Gummibuchsen (3) heißgeklebt sind, umfassend:
einen Förderer (C) zum Fördern des Stabilisators (1) auf einer Klemmvorrichtung (4) in einer Förderrichtung, wobei die Gummibuchsen (3) an Bindungsstellen (1s) auf dem Stabilisator (1), auf dem eine Klebeschicht gebildet ist, verpresst sind;
Leistungsversorgungsvorrichtungen (10) zum jeweiligen Liefern von Leistung an Spulen (5), die beim Hochfrequenzinduktionsheizen verwendet werden; und
die Spulen (5) zum jeweiligen Erhitzen zu erhitzender Abschnitte durch Erzeugen eines Magnetfelds in den zu erhitzenden Abschnitten nahe den Bindungsstellen (1s) auf dem Stabilisator, wobei
die Spulen (5) jeweils um einen vorbestimmten Abstand von den entsprechenden zu erhitzenden Abschnitten einer vorbestimmten Anzahl von Stabilisatoren, die in der Förderrichtung befördert werden, getrennt sind,
wobei die Spulen (5) ein oberes und ein unteres Paar von Spulen umfassen, die vier Abschnitte aufweisen, die an vier Positionen auf der linken und der rechten Seite der Gummibuchse und auf der oberen und der unteren Seite des Stabilisators in der Förderrichtung angeordnet sind,
wobei sich die Spulen (5) in der Förderrichtung und über den Stabilisator (1) erstrecken und jeweils einen vorderen Abschnitt und einen hinteren Abschnitt aufweisen, die mit einer Gummibuchse (3), die befördert wird, ausgerichtet sind, und
wobei der vordere Abschnitt und der hintere Abschnitt jeweils eine solche gebogene Form derart aufweisen, dass die Gummibuchse (3) und die Klemmvorrichtung (4) von dem vorderen Abschnitt und dem hinteren Abschnitt beabstandet sind, während sie von dem Förderer (C) in der Förderrichtung befördert werden.

2. Stabilisatorherstellungseinrichtung (S) nach Anspruch 1, wobei
die Spulen (5) erste Spulen und zweite Spulen umfassen, die stromabwärts der ersten Spulen in der Förderrichtung angeordnet sind,
die ersten Spulen die zu erhitzenden Abschnitte des Stabilisators (1), der in der Förderrichtung befördert wird, erhitzen, um Temperaturen der zu erhitzenden Abschnitte auf Temperaturen innerhalb eines Temperaturbereichs, in dem ein Kleben durch die Klebeschichten an den Bindungsstellen erzielt wird, zu erhöhen, und
die zweiten Spulen die zu erhitzenden Abschnitte des Stabilisators (1), die in der Förderrichtung befördert werden, erhitzen, um Temperaturen der zu erhitzenden Abschnitte innerhalb des Temperaturbereichs zu halten.

3. Stabilisatorherstellungseinrichtung (S) nach Anspruch 1 oder 2, wobei, wenn die Spulen (5) jeweils in dem vorbestimmten Abstand von den entsprechenden zu erhitzenden Abschnitten des Stabilisators (1), der in der Förderrichtung befördert wird, angeordnet sind, Positionen oder Neigungen der Spulen zweckdienlich in Abhängigkeit von einer Form des Stabilisators (1) und Stellen der Gummibuchsen (3), die an den Stabilisator (1) heißgeklebt sind, geändert werden.

4. Stabilisatorherstellungseinrichtung (S) nach einem der Ansprüche 1 bis 3, wobei die Spulen (5) Kerne aufweisen, die einen Umfang in mindestens einer anderen Richtung der Spule (5) umgeben als ein Abschnitt, der dem Stabilisator (1), der in der Förderrichtung befördert wird, zugewandt ist.

5. Stabilisatorherstellungseinrichtung (S) nach einem der Ansprüche 1 bis 4, die weiter einen oder eine Vielzahl von Temperatursensoren (12) zum Erfassen einer Temperatur der zu erhitzenden Abschnitte des Stabilisators (1), der in der Förderrichtung befördert wird, umfasst.

6. Stabilisatorherstellungseinrichtung (S) nach einem der Ansprüche 1 bis 5, die weiter einen Aushärteofen (R) umfasst, in dem das Hochfrequenzinduktionsheizen durchgeführt wird.

7. Stabilisatorherstellungsverfahren zum Herstellen eines Stabilisators (1), an den Gummibuchsen (3) heißgeklebt sind, das die folgenden Schritte umfasst:
einen Anordnungsschritt, bei dem, während eine vorbestimmte Anzahl von Stabilisatoren (1) von einem Förderer (C) befördert wird, die Gummibuchsen (3) an Bindungsstellen (1s) auf dem Stabilisator (1), auf dem eine Klebeschicht gebildet ist, verpresst werden, Spulen (5), die für ein Hochfrequenzinduktionsheizen verwendet werden, jeweils in einem vorbestimmten Abstand von zu erhitzenden Abschnitten der vorbestimmten Anzahl von Stabilisatoren (1) angeordnet sind, wobei die zu erhitzenden Abschnitte in der Nähe der Bindungsstellen liegen;
einen Förderschritt, bei dem der Förderer (C) die Stabilisatoren (1) jeweils auf einer Klemmvorrichtung (4) in einer Förderrichtung befördert;
einen Leistungsversorgungsschritt, bei dem Leistungsversorgungsvorrichtungen (10) Leistung an die Spulen (5) liefern; und
einen Heizschritt, bei dem die Spulen (5) die zu erhitzenden Abschnitte durch Erzeugen eines Magnetfelds in den zu erhitzenden Abschnitten des Stabilisators (1), der in der Förderrichtung befördert wird, erhitzen,
wobei die Spulen (5) ein oberes und ein unteres Paar von Spulen umfassen, die vier Abschnitte, die an vier Positionen auf der linken und der rechten Seite der Gummibuchse und auf einer oberen und einer unteren Seite des Stabilisators angeordnet sind, in der Förderrichtung aufweisen,
wobei sich die Spulen (5) in der Förderrichtung und über den Stabilisator (1) erstrecken und jeweils einen vorderen Abschnitt und einen hinteren Abschnitt aufweisen, die mit einer Gummibuchse (3), die befördert wird, ausgerichtet sind, und
wobei der vordere Abschnitt und der hintere Abschnitt jeweils eine solche gebogene Form derart aufweisen, dass die Gummibuchse (3) und die Klemmvorrichtung (4) von dem vorderen Abschnitt und dem hinteren Abschnitt beabstandet sind, während sie von dem Förderer (C) in der Förderrichtung befördert werden.

8. Stabilisatorherstellungsverfahren nach Anspruch 7, weiter umfassend:
einen Temperaturerhöhungsschritt des Erhitzens der zu erhitzenden Abschnitte auf eine Temperatur innerhalb eines Temperaturbereichs, in dem ein Kleben durch die Klebeschichten an den Bindungsstellen erzielt wird; und
einen Temperaturhalteschritt des Haltens einer Temperatur der zu erhitzenden Abschnitte innerhalb des Temperaturbereichs bei einer darauffolgenden Stufe des Temperaturerhöhungsschritts.

## Revendications

1. Appareil de fabrication de stabilisateur (S) pour fabriquer un stabilisateur (1) auquel des douilles de caoutchouc (3) sont thermocollées, comprenant :
un transporteur (C) pour transporter le stabilisateur (1) sur un gabarit de serrage (4) dans une direction de transport, les douilles de caoutchouc (3) étant collées par pression à des emplacements de collage (1s) sur le stabilisateur (1) sur lesquels une couche adhésive est formée ;
des dispositifs d'alimentation (10) pour alimenter respectivement des bobines (5) utilisées dans le chauffage par induction à haute fréquence ; et
les bobines (5) pour chauffer respectivement des portions à chauffer par génération d'un champ magnétique dans les portions à chauffer près des emplacements de collage (1s) sur le stabilisateur, dans lequel
les bobines (5) sont séparées respectivement d'une distance prédéterminée des portions correspondantes à chauffer d'un nombre prédéterminé de stabilisateurs transportés dans la direction de transport,
dans lequel les bobines (5) comprennent une paire supérieure et inférieure de bobines présentant quatre portions agencées dans quatre positions sur les côtés gauche et droit de la douille de caoutchouc et sur des côtés supérieur et inférieur du stabilisateur, dans la direction de transport,
les bobines (5) s'étendent dans la direction de transport et sur le stabilisateur (1) et chacune présente une portion avant et une portion arrière alignées sur une douille de caoutchouc (3) qui est transportée, et
dans lequel la portion avant et la portion arrière présentent chacune une telle forme pliée que la douille de caoutchouc (3) et le gabarit de serrage (4) sont espacés de la portion avant et la portion arrière tout en étant transportés par le transporteur (C) dans la direction de transport.

2. Appareil de fabrication de stabilisateur (S) selon la revendication 1, dans lequel
les bobines (5) comprennent des premières bobines et secondes bobines agencées en aval des premières bobines dans la direction de transport,
les premières bobines chauffent les portions à chauffer du stabilisateur (1) transporté dans la direction de transport, pour augmenter les températures des portions à chauffer à des températures dans une plage de température dans laquelle le collage par les couches adhésives est atteint sur les emplacements de collage, et
les secondes bobines chauffent les portions à chauffer du stabilisateur (1) transporté dans la direction de transport, pour maintenir les températures des portions à chauffer dans la plage de température.

3. Appareil de fabrication de stabilisateur (S) selon la revendication 1 ou 2, dans lequel lorsque les bobines (5) sont agencées respectivement à la distance prédéterminée des portions correspondantes à chauffer du stabilisateur (1) transporté dans la direction de transport, des positions ou inclinaisons des bobines sont changées de manière appropriée selon une forme du stabilisateur (1) et des emplacements des douilles de caoutchouc (3) thermocollées au stabilisateur (1).

4. Appareil de fabrication de stabilisateur (S) selon l'une quelconque des revendications 1 à 3, dans lequel les bobines (5) présentent des noyaux entourant une périphérie dans au moins une direction de la bobine (5) autre qu'une portion tournée vers le stabilisateur (1) transporté dans la direction de transport.

5. Appareil de fabrication de stabilisateur (S) selon l'une quelconque des revendications 1 à 4, comprenant en outre un ou une pluralité de capteurs de température (12) pour la détection de température des portions à chauffer du stabilisateur (1) transporté dans la direction de transport.

6. Appareil de fabrication de stabilisateur (S) selon l'une quelconque des revendications 1 à 5, comprenant en outre un four de trempe (R) dans lequel le chauffage par induction à haute fréquence est réalisé.

7. Procédé de fabrication de stabilisateur pour la fabrication d'un stabilisateur (1) auquel des douilles de caoutchouc (3) sont thermocollées, comprenant les étapes suivantes :
une étape d'agencement dans laquelle, alors qu'un nombre prédéterminé de stabilisateurs (1) sont transportés par un transporteur (C), les douilles de caoutchouc (3) étant collées par pression à des emplacements de collage (1s) sur le stabilisateur (1) sur lesquels une couche adhésive est formée, des bobines (5) utilisées pour le chauffage par induction à haute fréquence sont agencées respectivement à une distance prédéterminée de portions à chauffer du nombre prédéterminé de stabilisateurs (1), les portions à chauffer étant à proximité des emplacements de collage ;
une étape de transport dans laquelle le transporteur (C) transporte les stabilisateurs (1), chacun sur un gabarit de serrage (4), dans une direction de transport ;
une étape d'alimentation dans laquelle des dispositifs d'alimentation (10) alimentent les bobines (5) ; et
une étape de chauffage dans laquelle les bobines (5) chauffent les portions à chauffer par génération d'un champ magnétique dans les portions à chauffer des stabilisateurs (1) transportés dans la direction de transport,
dans lequel les bobines (5) comprennent une paire supérieure et inférieure de bobines présentant quatre portions agencées dans quatre positions sur les côtés gauche et droit de la douille de caoutchouc et sur des côtés supérieur et inférieur du stabilisateur, dans la direction de transport,
dans lequel les bobines (5) s'étendent dans la direction de transport et sur le stabilisateur (1) et présentent chacune une portion avant et une portion arrière alignées sur une douille de caoutchouc (3) qui est transportée, et
dans lequel la portion avant et la portion arrière présentent chacune une telle forme pliée que la douille de caoutchouc (3) et le gabarit de serrage (4) sont espacés de la portion avant et la portion arrière tout en étant transportés par le transporteur (C) dans la direction de transport.

8. Procédé de fabrication de stabilisateur selon la revendication 7, comprenant en outre :
une étape d'augmentation de température de chauffage des portions à chauffer à une température dans une plage de température dans laquelle le collage par les couches adhésives est obtenu sur les emplacements de collage ; et
une étape de maintien de température de maintien de la température des portions à chauffer dans la plage de température à un niveau ultérieur de l'étape d'augmentation de température.
